Europäisches Patentamt

(19) European Patent Office

Office européen des brevets

(11) Publication number: **0 113 940**
**A1**

(12) # EUROPEAN PATENT APPLICATION

(21) Application number: 83300201.7

(22) Date of filing: 14.01.83

(51) Int. Cl.³: **A 23 C 9/18**
// A23C1/10, A21D13/08

(43) Date of publication of application: 25.07.84
Bulletin 84/30

(71) Applicant: **P.A. Consulting Services Limited, Hyde Park House 60a Knightsbridge, London SW1X 7LE (GB)**

(72) Inventor: **Smith, David Grayston, 15 Marriotts Close, Felmersham Bedford, MK43 7HD (GB)**

(84) Designated Contracting States: **AT BE CH DE FR GB IT LI LU NL SE**

(74) Representative: **Matthews, Heather Clare et al, Keith W Nash & Co Pearl Assurance House 90-92 Regent Street, Cambridge CB2 1DP (GB)**

(54) A method of producing a water-insoluble milk based foam material, and material produced by the method.

(57) A water-insoluble milk based foam material is produced by heating a milk based paste or liquid in a manner so as to increase the temperature of the paste or liquid relatively rapidly and substantially uniformly throughout its volume to a temperature at which foaming and protein denaturing occurs but below that at which the Maillard reaction occurs. Because of the insoluble nature of the resulting material it finds particular application as foodstuff for use as a breakfast food (intended to be eaten with milk), and also as a snack product and third world foodstuff. Heatings is preferably effect by exposure to microwave energy or radio frequency energy, or possibly also by induction, resistance or ohmic heating.

ACTORUM AG

Title: A method of producing a water-insoluble milk based foam material, and material produced by the method.


## DESCRIPTION.


### Field of invention

This invention relates to the generation of texturised milk materials which are insoluble in water, and concerns a method of producing a water-insoluble milk based foam material and also a material produced by the method, particularly in the form of a foodstuff for use e.g. as a breakfast food. The term "milk" is used herein to mean milk from cows.

### Background to the invention

The composition of milk is such that a foam can be created by generating gas bubbles within a concentrated milk syrup. If the foam is dried in such a way as to maintain its structure, then an open textured dry milk foam can be created.

The traditional method of achieving this dry foam is by subjecting concentrated milk syrup to a vacuum plus some warmth. This method is used for the production of malted milk drinks. An essential part of this prior art is that vacuum drying retains the milk proteins in a water soluble form, which is of course highly desirable in a drink dry mix.

If it is desired to generate a foam textured product from milk which is insoluble in water, then certain problems arise. If milk syrup is heated by conventional means to an extent such that a foam is generated and the milk proteins are denatured to render the material insoluble in water, the milk develops unattractive flavour and colour notes by the Maillard reaction (proteins + sugars + heat = brown colours + caramelised flavours).

It is accordingly an object of the present invention to provide a method of producing a water-insoluble milk based foam material which does not result in the production of Maillard flavours and colours.

## The invention

According to one aspect of the present invention there is provided a method of producing a water-insoluble milk based foam material, comprising heating a milk based substance in a manner so as to increase the temperature of the substance relatively rapidly and substantially uniformly through its volume to a temperature below that at which the Maillard reaction occurs.

The term "substance" is used herein to mean material in liquid or paste form.

The foaming and denaturising reactions for producing an insoluble foam material occur at just below 100°C. In contrast the Maillard reaction occurs at a temperature greater than 100°C. Accordingly, by heating the substance to a temperature at which foaming and denaturising can occur, but below that at which the Maillard reaction occurs, a water-insoluble milk based foam material can be produced which does not have undesirable Maillard flavours and colours.

The presently preferred heating techniques involves exposing the substance to a source of microwave energy. Microwave energy acts to cause vibration and heating of water molecules throughout the substance, causing a substantially uniform and relatively rapid increase of temperature throughout the material, rather than just heating the surface of the material. The whole of the substance is therefore simultaneously heated to a tempeature at which foaming (by evaporation of heated water), stabilisation through protein denaturation, and partial drying can take place. The presence of water in the material prevents the temperature from rising above 100°C and so prevents the undesirable Maillard reaction from taking place. Water thus acts as a buffer preventing the Maillard reaction from taking place.
The use of radio frequency energy is another possible heating technique. This form of energy acts in exactly the same manner as microwave energy, causing vibration of water molecules resulting in evaporation and heating.

Other possible heating techniques include induction heating, resistance heating and ohmic heating.

The method may also include one or more drying steps. For example, the foamed material produced by exposure to, say, microwave or radio frequency energy may be further dried by use of any convenient drying technique such as by vacuum drying or, more preferably, by use of a continuous hot air oven. In the case of method involving ohmic heating it is envisaged that a supplementary drying step after heating will probably be essential to produce a sufficient degree of drying.

An initial drying step may additionally or alternatively be employed to cause a preliminary reduction of water content prior to the main heating step. In practice, for large scale production, a sequence of steps which is most favourable and efficient bearing in mind economic and other considerations can be selected.

Because of the insoluble nature of the material produced by the method, the material finds particular application as a foodstuff, e.g. in the form of flakes or other shapes, intended to be eaten with milk in the manner of conventional breakfast cereals. It is found that such flakes etc., will retain their crispness and texture when in contact with milk for a period comparable to that of conventional breakfast cereals. Other possible foodstuff uses include use as a snack product, possibly in the form of bite size, crisp-like pieces or larger bars, and also as a food ingredient e.g. for incorporation in confectionary, possibly being chocolate coated. A further possible use is as a third world foodstuff. The insoluble nature of the material makes transportation much easier than is the case with presently available water-soluble dried products.

The starting material may comprise, for example, reconstituted skimmed milk powder in the form of a syrup or paste. One preferred starting material comprises liquid skimmed milk concentrate. In the latter case, an initial drying step prior to the heating stage, eg microwave exposure, is preferably employed for economic reasons.

- 5 -

0113940

One or more of a wide variety of flavouring and/or colouring agents may be added to the milk based substance, resulting in production of a material having a wide range of possible colours and flavours, ranging from sweeter fruity flavours through malty flavours to savoury products. Standard commercially available agents may be used for this purpose, e.g. those available from firms such as Firmenich & Co., Bush Boake Allen, Lucas and Food Industries Limited. In this way a variety of different materials for use as foodstuffs may be produced to satisfy the well known consumers' reqirement for change which is demonstrated by the cyclical nature of the demand for individual cereals.

Sugar or other sweetening agents may also be included in the milk based substance. It is found that the sugar content of the substance affects the texture of the resulting material, as well as the flavour. Other ingredients may also be included in the substance as appropriate. For example, additives such as cereal, nuts and fruit may be included in a substance for use in producing a muesli-product.

The proportion of added water in the milk-based substance alters the texture of the resulting product. The milk-based substance preferably contains between 20 and 50% added water. A particularly preferred range of water content is 23.3% to 46.5%.

The method of the invention may conveniently be carried out using a conventional microwave or other suitable oven. The method may be carried out on a batch basis, but preferably is carried out in a continuous manner, e.g. using a continuous microwave oven.

The material may conveniently be produced in the form of a relatively large mat or the like which may then be treated as appropriate depending on the intended use of the material. For example, in the case of material intended for use as a foodstuff, the mat may be cut into flakes or other similar pieces of appropriate size for easy consumption. Alternatively the material may be initially formed in smaller pieces.

A further production possibility which is envisaged involves feeding the substance continuously through a tube which is transparent to microwave (or other suitable) energy through a microwave (or other) exposure area, resulting in heating and foaming of the material. The heated foamed material is then passed continuously through a drying section being fed e.g. through an apertured stainless steel tube, where moisture is extracted from the material by a technique such as vacuum drying. The dried, foamed material may then be fed past a cutting station where extruded material is cut to desired sizes.

In a further aspect of the present invention provides a water-insoluble milk based foam matrial produced by the method of the invention.

In a preferred form of this aspect, the invention provides a foodstuff comprising this material.

The range of products made using the inventive process preferably contains between 20 and 50% added water. The increase in added water results in different product textures and the following formulation examples show two products which fall into a higher water category and two products which fall into a lower category. All proportions given are by weight.

## Example 1

### Cheese and onion flavoured crisp (high water category)

A smooth paste mixture was made using 50.5% skimmed milk powder, 1.3% cheese flavour powder, 2% onion flavour powder and 46.2% added water.

The paste was heated in a microwave oven for a period of 3 to 4 minutes. The rapid increase in product temperature caused the water to boil and produce foamed texture.

After microwave treatment the product was cut to defined shapes and further dried to less than 5% moisture using either a hot air oven or a vacuum oven at between 60°C and 80°C.

The final product was a crisp, flavoured material, formed from expanded milk protein.

## Example 2

### Strawberry flavoured crisp (high water catergory)

As in Example 1, a smooth creamy paste was formed with 45% skimmed milk powder, 13.5% sugar, 0.2% strawberry flavour, 0.05% powdered red colour, and 42.25% added water.

The paste was treated in a microwave oven and hot air oven as described in Example 1 to produce a crisp strawberry flavoured product.

Liquid milk could then be added to pieces of the strawberry flavoured crisp without any significant dissolving of the product and with a crisp texture being retained for a few minutes.

Example 3

Museli biscuit product (low water category)

A thick, viscous paste was made using 39.5% skimmed milk powder, 11.8% sugar, 19.7% Museli mixture (cereals, nuts, dried fruit, sugar, milk powder) and 29.0% added water.

The paste was deposited into bar sections in a plastics mould and the product then heated in a microwave oven for about 2 1/2 minutes.

The paste expanded to form an aerated bar product having the shape of the mould.

After microwave treatment the product was dried in a conventional hot air oven at a temperature between 60°C and 80°C.

The product could also be coated in chocolate if required or used as a breakfast cereal with milk.

Example 4

Malted milk biscuit product (low water category)

A smooth viscous paste was made using 51% skimmed milk powder, 15.3% sugar, 0.5% malt flavour, 0.5% caramel colouring, and 33.6% added water.

- 9 -

0113940

The paste was deposited in moulds, microwave heated, and dried as in Example 3.

The final aerated biscuit was dried to less than 5% moisture content forming a textured, flavoured product which could be coated with other food ingredients (chocolate, nuts etc.,) or used as a breakfast cereal with added liquid milk.

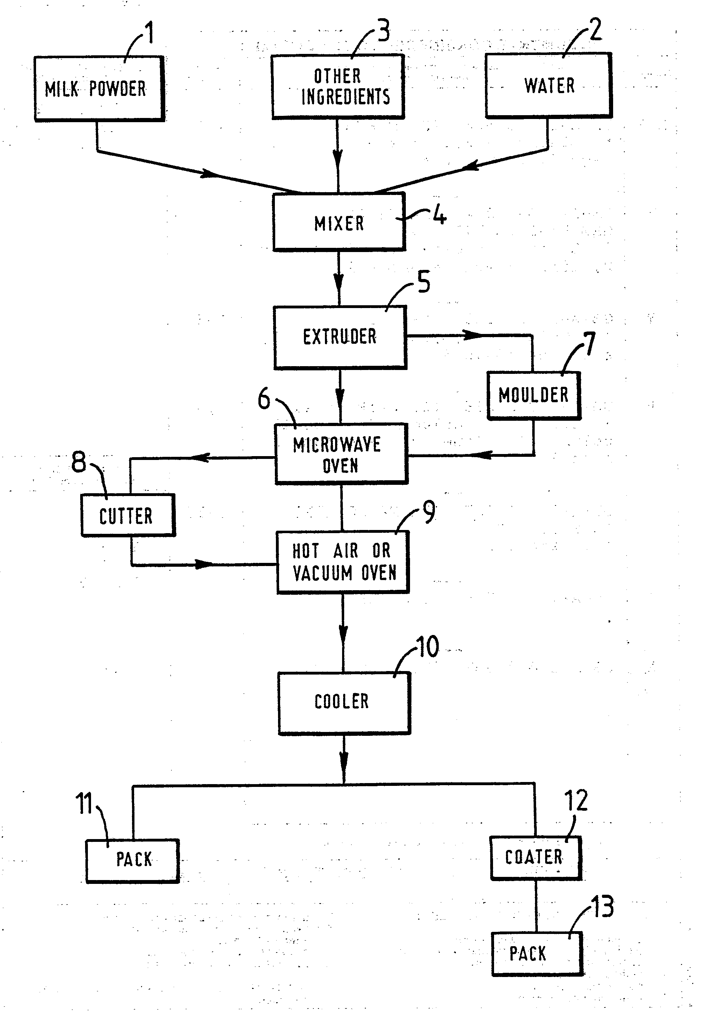

The accompanying drawing shows one preferred process in schematic flow diagram form.

Milk powder 1 is combined with water 2 and other ingredients 3 and mixed in a mixer 4 to form the paste mixture previously mentioned. The paste mixture is extruded in an extruder 5 and then heated in a microwave oven 6. The extruded material may be subjected to an optional moulding step before heating in the microwave oven 6, in which case the extruded material is delivered into moulds in a moulder 7. After microwave treatment in the oven 6, material which has been fed directly from the extruder 5 into the oven 6 is cut on a cutter 8. Material which has been fed into moulds on the moulder 7 need not be cut and is fed directly to a hot air oven or vacuum oven 9. After cooling in a cooler 10, the product is either packed in a packet 11, or first coated in a coater 12 and then packed in a packet 13.

<u>Claims</u>

1. A method of producing a water-insoluble milk based foam material, comprising heating a milk based substance in a manner so as to increase the temperature of the substance relatively rapidly and substantially uniformly throughout its volume to a temperature below that at which the Maillard reaction occurs.

2. A method according to claim 1, wherein the substance is heated to a temperature in the region of 100°C.

3. A method according to claim 1 or 2, wherein the substance is heated by exposure to microwave energy.

4. A method according to any one of claims 1 to 3, further comprising one or more drying steps.

5. A method according to any one of the preceding claims, wherein the heating is carried out in a continuous microwave oven.

6. A method according to any one of the preceding claims, wherein the milk based substance comprises skimmed milk.

7. A method according to claim 6, wherein the milk based substance comprises reconstituted skimmed milk powder.

8. A method according to claim 6, wherein the milk based substance comprises liquid skimmed milk concentrate.

9. A water-insoluble milk based foam material produced by the method of any one of the preceding claims.

- 2 -

0113940

10. A foodstuff comprising material according to claim 9.

0113940

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | FR-A-1 436 406 (H. MORGAN) <br> * Claims 1,2,3,7; examples 1,2; page 2, column 2 * | 1-10 | A 23 C 9/18 // <br> A 23 C 1/10 <br> A 21 D 13/08 |
| Y | CH-A- 531 314 (BATTELLE MEMORIAL INSTITUTE) <br> * Claims; under-claim 8; column 2, lines 17-21; example 2 * | 1-3,5 | |
| Y | GB-A-2 055 285 (NESTLE) <br> * Columns 1,8,10; example 1; examples 10-16 * | 1-5 | |
| A | US-A-3 978 236 (L. SAIR et al.) <br> * Claim 1; column 8, line 10; column 1, line 21 - column 2, line 23 * | 1,3 | |
| E | GB-A-2 101 867 (PA MANAGEMENT CONSULTANTS) <br> * Claims 1-16 * | 1-10 | **TECHNICAL FIELDS SEARCHED (Int. Cl. ³)** <br><br> A 23 C <br> A 21 D <br> A 23 P |
| A | FR-A-1 255 728 (LACTISSA) | | |
| A | US-A-1 434 667 (L. THOMPSON) | | |

The present search report has been drawn up for all claims

| Place of search | Date of completion of the search | Examiner |
|---|---|---|
| THE HAGUE | 13-09-1983 | DESMEDT G.R.A. |